# EUROPEAN PATENT SPECIFICATION

(11) **EP 1 584 273 B1**
(45) Date of publication and mention of the grant of the patent: **19.03.2008**
(21) Application number: 05076156.8
(22) Date of filing: 18.05.2005
(51) Int. Cl.: A47J 31/46, A47J 31/54

(54) **Device for the temperature control of the dispenser groups in a machine for preparing coffee**
Vorrichtung zur Temperaturkontrolle der Ausgabegruppen in einer Kaffeemaschine
Dispositif pour contrôler la température des groupes distributeurs dans une machine à café

(30) Priority: 20.05.2004 ES 200401211
(43) Date of publication of application: 12.10.2005
(73) Proprietor: Quality Espresso, SA, 08040 Barcelona (ES)
(72) Inventor: Viguer Munoz, Rafael, 08040 Barcelona (ES)
(74) Representative: Gislon, Gabriele

(56) References cited:
- EP-A- 1 074 210
- US-A- 5 613 422
- US-A1- 2002 141 742

## Description

### Sector of the technique

This invention concerns to a machine for preparing coffee with a device for the temperature control of the dispenser groups thereof. The invention is particularly applicable to a machine for the preparation of espresso coffee, which generally comprise two or more groups of dispensers, which are used in public establishments with consumption demands that may be high, providing precise, independent control of each dispenser group, although the invention's principle is also useful for a machine with a single dispenser group for the preparation of espresso coffee.

### Status of the previous technique

The machine covered by this invention is of the type comprising a pressurised heated water boiler that is the source of the steam and which houses one or more heating pipes that work by the thermal exchange of a flow of water that passes through them fed from a cold water supply line at a preset pressure, with each thermal pipe forming a circuit with inlet and outlet and thermosiphon circulation via the body of each dispenser group that has been fitted with some means of supply, such as an electro-valve, to provide a flow of hot water from the said circuit to a receptacle or ladle coupled to a detachable ladle-holder, containing coffee.

In such a structure, the temperature of each dispenser group is a function of the boiler temperature so that the latter can be regulated, but a different temperature is not possible in each group and because of thermal inertia, a desired temperature change requires a significant amount of time to take effect.

Through document US-A-5.813.318, a proposal of this class of machines is known that includes an additional individual heater unit for each group.

A similar proposal is known through patent ES-A-2.186.529

US-A-5.813.422 relates to an espresso coffee maker provided with a heat exchanger, a coffee dispenser unit and a water supply system in conjunction with the heat exchanger for supplying heated water to the coffee dispenser unit. The water supply system feeds cold water to the heat exchanger and heated water is delivered to the dispenser unit. A heated water return pipe is connected to the heat exchanger from the dispenser unit to form a recirculation circuit between the heat exchanger and the dispenser unit through which the heated water flows by natural convection to transfer heat from the heat exchanger to the dispenser unit. The water supply system includes at least one heat operated control valve incorporated in the recirculation circuit. The valve provided with a chamber and a shutter is movable in the chamber to control the circulation of the water. A bias element made of a shape-memory material acting as a temperature sensor, urges the shutter towards a normal position throttling down the transfer port when the temperature of the water through the recirculation circuit is above the transition temperature of the shape-memory material.

### Explanation of the invention

One objective of the invention is to take advantage of the known structure of a machine for preparing coffee with a boiler fitted with heater pipes that operate as heat exchangers as already explained in order to achieve a precise temperature for each dispenser group and hence a final temperature of the obtained coffee and also to be able to rapidly vary the said temperature and, in the case of the machine including several dispenser groups, to provide an independent temperature for each one.

To this end, this invention proposes a device as defined in claim 1, for the temperature control of a dispenser group that is applicable to a machine for preparing coffee with a boiler fitted with some means of heating (for example, an armoured electric heating element) for heating the water inside, at least one heater pipe in the form of a heat exchanger inside the said boiler, a cold water feed line coming from a water supply source at a preset pressure connected to the said heater pipe, a pipe connected at one of its ends to an outlet of the said heater pipe, and at the other end to an inlet of the same, with at least part of the said pipe extending through a body of a dispenser group to heat the same by means thermosiphon circulation by the hot water from the heater pipe, with the said dispenser group body including an electro-valve that is connected so that it derives a flow of hot water from the pipe to at least one hot water outlet for the preparation of coffee.

The proposed device is characterised as defined in the characterizing portion of claim 1, because it includes a flow it includes a flow regulation organ in a section of the thermosiphon circulation pipe, a temperature detector or sensor in the dispenser group body and the means of electronic control adapted to control the said flow regulation organ by means of signals coming from the said temperature sensor in order to vary or temporarily interrupt the flow of hot water through the pipe. In this way, and in function of the number of times that the said thermosiphon circulation is interrupted, a differing amount of energy is supplied to the dispenser group body, which in general, is a block of metal and in this way its temperature is varied until the associated sensor indicates that the desired temperature has been attained.

Since the device operates on the heating circuit of each dispenser group, regulating the flow of heating fluid that circulates through it, a precise temperature can be attained in the said dispenser group and, if the machine contains several groups, something that is very common, a different temperature may be defined for each one by simply adjusting the regulating organ from a control centre, such as a control panel that governs the machine.

The regulating organ has been produced in the examples given by using an electro-valve, although other electronically controlled flow regulating devices are also applicable.

The said control panel will be advantageously associated with a display unit for the temperature of each group, together with a keypad for entering the desired temperature for each one.

### Brief description of the drawings

The previous characteristics and other advantages of the invention will be appreciated with greater clarity from the following description of a series of construction examples, some of which are illustrated in the included drawings and which must be taken as illustrative, non-limiting examples.

In these drawings:
Fig. 1 shows the simplified elevation of part of a machine in which the proposed device in this invention is applied, where a section of a dispenser group can be seen connected to a corresponding heating pipe operating as a steam boiler heat exchanger,
Fig. 2 schematically shows part of a coffee machine in which the boiler comprises four heater pipes or heat exchangers, which are connected to four corresponding espresso coffee dispenser groups, and with a cold water supply coming from a supply source connected to the heater pipe, and
Fig. 3 shows, for a construction example, the electronic control means installed in a central unit and associated with various temperature sensors fitted to the respective dispenser groups and to their corresponding flow regulation organs.

### Detailed description of a construction example

Just as shown by the figures, the device for the temperature control of the dispenser group in a machine for preparing espresso coffee, as proposed by this invention, applies to a machine of the type comprising a boiler 2, fitted with the means of heating water inside and providing a source of steam, at least one heater pipe 12 or heat exchanger, inserted in the said boiler 2, which is accessed by a cold water line 13 from a supply source, a pipe 4 connected by one of its ends to an outlet 4a of the said heater pipe 12 and at the other end to an inlet 4b of the same, with at least part of the said pipe 4 extending through a body 3a of a dispenser group 3 to heat the same by thermosiphon circulation by the hot water from the said heater pipe 12, where the body 3a of the said dispenser group 3 included an electro-valve 6 that is connected so that it derives a flow of hot water from the pipe 4 to at least one hot water outlet 5 for the preparation of coffee.

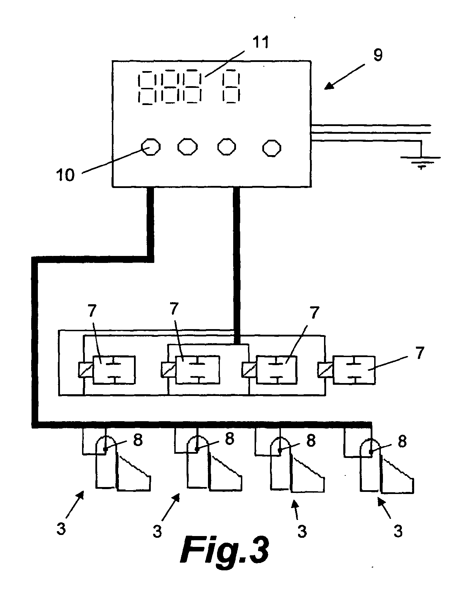

The device, according to the illustrated example, comprises a flow regulation organ 7 installed in a section of pipe 4, a temperature sensor 8 (see Fig. 3) in the said body 3a of the dispenser group 3, together with the means of electronic control 9 adapted to control the said flow regulation organ 7 by means of signals coming from the said temperature sensor 8 in order to vary or interrupt the flow of hot water through the pipe 4.

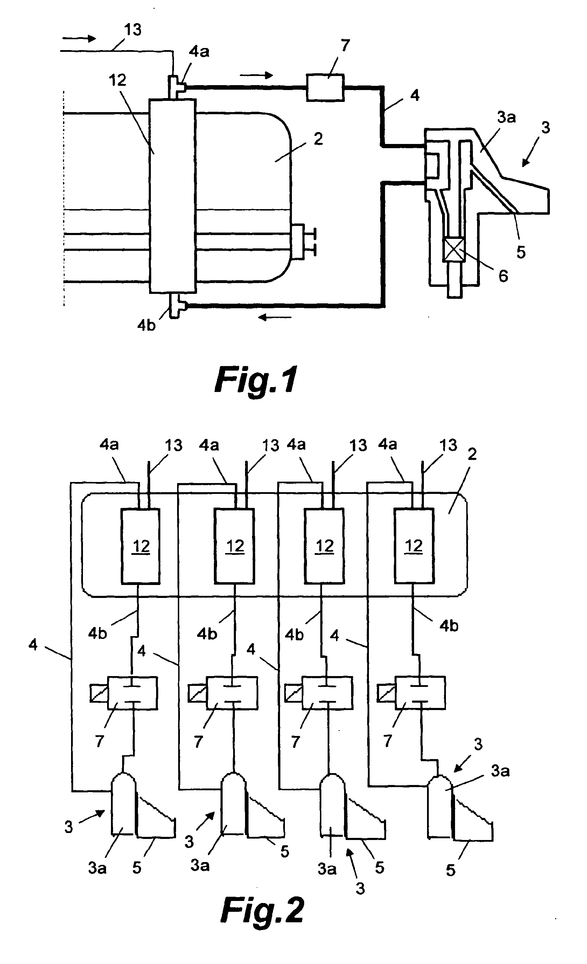

In the preferred construction example shown in Fig. 1, the flow regulation organ 7 is installed in a section of the pipe 4 that extends from the outlet 4a of the heater pipe 12 to the body 3a of dispenser group 3.

In another construction example that is not shown, the flow regulation organ 7 can also be placed inside a section of pipe 4 that extends from the body 3a of the dispenser group 3 to the inlet 4b of the heater pipe 12.

The said regulation organ 7 in these examples consists of an electro-valve.

The device will be preferably applied to a machine fitted with various dispenser groups 3 (see Figs. 2 and 3), each of which is associated with its respective heater pipe 12, or heat exchanger by means of a pipe 4, with its associated flow regulation organ 7 and fitted with its respective temperature sensor 8, with the said means of electronic control 9 adapted to independently control each of the flow regulation 7 by means of signals from their respective temperature sensors 8 and in function of a preset temperature entered by the said means or control panel 9.

The means of electronic control 9 consist of the means of independently programming and monitoring the temperature of body 3a of each dispenser group 3. An example of such means of control 9 is shown in Fig. 3.

The said means of programming and monitoring include the means of entering data 10 and the means of display 11.

An expert in the material would be able to introduce changes and modifications in the described construction example, without leaving the scope of the invention as defined by the attached claims.

## Claims

1. A machine for preparing coffee, this machine being of the type comprising a boiler (2), fitted with means of heating water inside, at least one heater pipe (12) functioning as a heat exchanger inserted in the said boiler (2), with a cold water feed line (13) coming from a supply source connected to the same, a pipe (4) connected by one of its ends to an outlet (4a) of the said heater pipe (12) and at the other end to an inlet (4b) of the same, with at least part of the said pipe (4) extending through a body (3a) of a dispenser group (3) to heat the same by thermosiphon circulation by the hot water from the said heater pipe (12), where the body (3a) of the said dispenser group (3) includes an electro-valve (6) that is connected so that it derives a flow of hot water from the pipe (4) to at least one hot water outlet (5) that discharges into an enclosed area for the preparation of coffee, said machine comprising a device for the temperature control of said dispenser group, which comprises a flow regulation organ (7) installed in a section of said pipe (4), **characterised in that** it also comprises a temperature sensor (8) placed in said body (3a) of the dispenser group (3) for detecting the temperature of said body (3a) of the dispenser group (3), together with means of electronic control (9) adapted to control the said flow regulation organ (7) by means of signals coming from the said temperature sensor (8) in order to vary or interrupt the flow of hot water through the pipe (4).

2. - A machine in accordance with claim 1, **characterised in that** the flow regulation organ (7) is installed in a section of pipe (4) which extends from the outlet (4a) of the heater pipe (12) to the body (3a) of the dispenser group (3).

3. - A machine in accordance with claim 1, **characterised in that** the flow regulation organ (7) is installed in a section of pipe (4) which extends from the body (3a) of the dispenser group (3) to the inlet (4b) of the heater pipe (12).

4. - A machine in accordance with claim 1, **characterised in that** it-comprises several dispenser groups (3), each associated with its respective heater pipe (12) and **in that** each pipe (4) has its associated flow regulation organ (7) and fitted with its respective temperature sensor (8), with the said means of electronic control adapted to independently control each of the flow regulation organs (7) by means of signals from their respective temperature sensors (8).

5. - A machine in accordance with claim 4, **characterised in that** the means of electronic control (9) comprise the means of programming and monitoring in order to independently programme and monitor the temperature of body (3a) of each dispenser group (3).

6. - A machine in accordance with claim 5, **characterised in that** the said means of programming and monitoring include the means of data entry (10) and the means of display (11).

7. - A machine in accordance with claim 1, **characterised in that** the controlled flow regulation organ (7) is an electro-valve.

## Patentansprüche

1. Kaffeemaschine, mit einem Wasserkocher (2), der im Innern mit Wassererhitzungsmitteln ausgestattet ist, mindestens einem Heizrohr (12), das als Wärmetauscher fungiert und im Wasserkocher (2) eingebaut ist, wobei eine Kaltwasser-Zufuhrleitung (13) aus einer damit verbundenen Zufuhrquelle kommt, ein Rohr (4) an einem Ende mit einem Auslass (4a) des Heizrohrs (12) und am anderen Ende mit einem Einlass (4b) desselben verbunden ist, wobei sich das Rohr (4) zumindest teilweise durch einen Körper (3a) einer Ausgabebaugruppe (3) erstrecht, um diese durch Wärmeumlauf des aus dem Heizrohr (12) stammenden Heißwassers zu erhitzen, wobei der Körper (3a) der Ausgabebaugruppe (3) ein Elektroventil (6) aufweist, das so angeschlossen ist, dass hiermit ein Heißwasserstrom aus dem Rohr (4) an mindestens einen Heißwasserauslass (5) geleitet wird, der zur Kaffeezubereitung in einen geschlossenen Bereich mündet, wobei die Maschine ein Gerät zur Temperaturkontrolle der Ausgabebaugruppe aufweist, das ein Organ zur Durchflussregulierung (7) aufweist, das in einem Abschnitt des Rohrs (4) eingebaut ist, **dadurch gekennzeichnet, dass** sie ebenfalls einen Temperaturfühler (8), der in dem Körper (3a) der Ausgabegruppe (3) zur Erfassung der Temperatur des Körpers (3a) der Ausgabegruppe (3) positioniert ist, zusammen mit Mitteln zur elektronischen Steuerung (9) aufweist, mit denen das Organ zur Durchflussregulierung (7) über vom Temperaturfühler (8) kommenden Signale gesteuert werden kann und hierdurch der Durchfluss des Heißwassers durch das Rohr (4) variiert oder unterbrochen werden kann.

2. Maschine nach Anspruch 1, **dadurch gekennzeichnet, dass** das Organ zur Durchflussregulierung (7) in einem Abschnitt des Rohrs (4) eingebaut ist, der sich vom Auslass (4a) des Heizrohrs (12) zum Körper (3a) der Ausgabebaugruppe (3) erstreckt.

3. Maschine nach Anspruch 1, **dadurch gekennzeichnet, dass** das Organ zur Durchflussregulierung (7) in einem Abschnitt des Rohrs (4) eingebaut ist, der sich vom Körper (3a) der Ausgabebaugruppe (3) zum Einlass (4b) des Heizrohrs (12) erstreckt.

4. Maschine nach Anspruch 1, **dadurch gekennzeichnet, dass** sie mehrere Ausgabebaugruppen (3) aufweist, die jeweils mit einem entsprechenden Heizrohr (12) verbunden sind, und dass jedes Rohr (4) ein zugehöriges Organ zur Durchflussregulierung (7) aufweist und mit einem entsprechenden Temperaturfühler (8) ausgestattet ist, wobei mit den Mitteln zur elektronischen Steuerung das jeweilige Organ zur Durchflussregulierung (7) über die von dem entsprechenden Temperaturfühler (8) kommenden Signale selbsttätig gesteuert werden kann.

5. Maschine nach Anspruch 4, **dadurch gekennzeichnet, dass** die Mittel zur elektronischen Steuerung (9) Programmier- und Überwachungsmittel zur selbsttätigen Programmierung und Überwachung der Temperatur des Körpers (3a) der jeweiligen Ausgabebaugruppe (3) aufweist.

6. Maschine nach Anspruch 5, **dadurch gekennzeichnet, dass** die Programmier- und Überwachungsmittel Dateneingangsmittel (10) und Anzeigemittel (11) aufweisen.

7. Maschine nach Anspruch 1, **dadurch gekennzeichnet, dass** es sich bei dem Organ zur kontrollierten Durchflusssteuerung (7) um ein Elektroventil handelt.

## Revendications

1. Une machine pour préparer du café, cette machine étant du genre comportant un réservoir (2), pourvu de moyens pour y chauffer de l'eau, au moins un tuyau de chauffage (12) fonctionnant comme échangeur thermique engagé dans ce réservoir (2), une conduite d'alimentation en eau froide (13) provenant d'une source d'alimentation reliée à celui-ci, un tuyau (4) relié par une de ses extrémités à une sortie (4a) de ce tuyau chauffant (12) et à l'autre extrémité, à une entrée (4b) de celui-ci, au moins une partie de ce tuyau (4) s'étendant à travers le corps (3a) d'un groupe de distribution (3) pour le chauffer par circulation à thermosiphon avec l'eau chaude provenant de ce tuyau chauffant (12), où le corps (3a) de ce groupe de distribution (3) comporte une électrovanne (6) qui est reliée de sorte qu'elle dévie un débit d'eau chaude du tuyau (4) à au moins une sortie d'eau chaude (5) que est déchargée dans une région fermée pour préparer le café, cette machine comportant un dispositif pour le contrôle de la température de ce groupe distributeur, qui comporte un organe de réglage du débit (7) installé dans une section de ce tuyau (4) **caractérisée en ce qu'**elle comporte également un capteur de température (8) placé dans ce corps (3a) du groupe distributeur (3) pour détecter la température de ce corps (3a) du groupe distributeur (3) ainsi que des moyens de contrôle électronique (9) adaptés pour contrôler cet organe de réglage de débit (7) au moyen de signaux provenant de ce capteur de température (8) afin de changer ou d'interrompre le débit d'eau chaude à travers le tuyau (4).

2. Une machine conformément à la revendication 1, **caractérisée en ce que** l'organe de réglage du débit (7) est installé dans une section du tuyau (4) s'étendant depuis l'ouverture (4a) du tuyau chauffant (12) jusqu'au corps (3a) du groupe distributeur (3).

3. Une machine conformément à la revendication 1, **caractérisée en ce que** l'organe de réglage du débit (7) est installé dans une section du tuyau (4) s'étendant depuis le corps (3a) du groupe distributeur (3) jusqu'à l'entrée (4b) du tuyau chauffant (12).

4. Une machine conformément à la revendication 1, **caractérisée en ce qu'**elle comporte plusieurs groupes de distribution (3) chacun étant relié à son tuyau chauffant respectif (12) et **en ce que** chaque tuyau (4) possède son organe de réglage de débit (7) qui y est relié et pourvu de son capteur de température respectif (8), ces moyens de contrôle électronique étant adaptés pour contrôler indépendamment chacun des organes de réglage de débit (7) au moyen de signaux provenant de leurs capteurs de température respectifs (8).

5. Une machine conformément à la revendication 4, **caractérisée en ce que** les moyens de contrôle électronique (9) comportent les moyens de programmation et surveillance pour programmer et contrôler indépendamment la température du corps (3a) de chaque groupe distributeur (3).

6. Une machine conformément à la revendication 5, **caractérisée en ce que** ces moyens de programmation et de surveillance comportent les moyens d'entrée de données (10) et les moyens d'affichage (11).

7. Une machine conformément à la revendication 1, **caractérisée en ce que** l'organe de réglage de débit contrôlé (7) est une électrovanne.
